# EUROPEAN PATENT APPLICATION

(11) **EP 4 814 733 A1**
(43) Date of publication of application: **30.09.2026**
(21) Application number: 26165122.8
(22) Date of filing: 16.03.2026
(51) Int. Cl.: G06F 13/40, G06F 1/3287

(54) **CONVERSION APPARATUS AND COMMUNICATION METHOD**

(30) Priority: 25.03.2025 JP 2025050594
(71) Applicant: Yokogawa Electric Corporation, Musashino-shi, Tokyo 180-8750 (JP)
(72) Inventor: HARA, Morio, Musashino-shi, Tokyo, 180-8750 (JP)
(74) Representative: Winter, Brandl - Partnerschaft mbB

(57) **Abstract**

The communication conversion adapter (4) is a conversion apparatus that performs interconversion between wired communication and wireless communication, and includes a selector (11), and a large capacity memory (10) that is connected to the selector (11). The selector (11) switches between the path (106) through which internal data that is input to the large capacity memory (10) passes, and a path (107) through which external data that is output from the large capacity memory (10) passes. The large capacity memory (10) receives an internal process to be performed on the internal data by way of the path (106), and receives an external process to be performed on the external data by way of the path (107).

## Description

### FIELD

The present disclosure relates to a conversion apparatus and a communication method.

### BACKGROUND

There is a known wireless/wired communication conversion adapter (hereinafter, referred to as a "communication conversion adapter" as appropriate) that collects process data acquired by a field instrument that is installed at each process in a plant by using wired communication, and that enables wireless communication to be performed with each of the field instruments (see, for example, Japanese Patent No. 5946452, U.S. Patent No. 11956093, and Japanese Patent No. 5130532).

However, it is difficult to optimize data communication in wired communication and wireless communication. For example, with the above described communication conversion adapter, there is only a path for transmitting data received via the wired communication to an upper level system, so that the data acquired by the communication conversion adapter becomes invalid in a case where no worker is present or in a case where no wireless host is available. Furthermore, with the above described communication conversion adapter, in a case where a large capacity memory (hereinafter, simply referred to as a "memory" as appropriate) that stores therein process data is mounted, a controller that is connected to an electric current output loop line that is used for the wired communication and electric power that is able to be supplied from each of the field instruments are limited, the communication conversion adapter may become inoperable.

Accordingly, the present disclosure has been conceived in light of the circumstances described above and an object thereof is to optimize data communication in wired communication and wireless communication.

### SUMMARY OF THE INVENTION

According to an aspect of the embodiments, a conversion apparatus that performs interconversion between wired communication and wireless communication, the conversion apparatus includes a selector, and a device that is connected to the selector, wherein the selector switches between a first path through which first data that is input to the device passes and a second path through which second data that is output from the device passes, and the device receives an internal process to be performed on the first data by way of the first path, and an external process to be performed on the second data by way of the second path.

According to an aspect of the embodiments, a communication method performed by a conversion apparatus that performs interconversion between wired communication and wireless communication and that includes a selector and a device that is connected to the selector, the communication method includes switching, performed by the selector, between a first path through which first data that is input to the device passes, and a second path through which second data that is output from the device passes, receiving, performed by the device, an internal process to be performed on the first data by way of the first path, and receiving, performed by the device, an external process to be performed on the second data by way of the second path.

### BRIEF DESCRIPTION OF THE DRAWINGS

FIG. 1 is a diagram illustrating a configuration example and a process example related to a data communication system according to an embodiment;
FIG. 2 is a block diagram illustrating an example of a configuration of each device included in the data communication system according to the embodiment;
FIG. 3 is a diagram illustrating a timing chart of an electric current consumption in a data communication system according to a reference technology;
FIG. 4 is a diagram illustrating a timing chart of an electric current consumption in the data communication system according to the embodiment;
FIG. 5 is a flowchart illustrating one example of the overall flow of the process performed in the data communication system according to the embodiment;
FIG. 6 is a flowchart illustrating one example of the flow of a communication data management process performed in the data communication system according to the embodiment;
FIG. 7 is a flowchart illustrating one example of the flow of an internal data management process performed in the data communication system according to the embodiment;
FIG. 8 is a flowchart illustrating one example of the flow of an external data management process performed in the data communication system according to the embodiment;
FIG. 9 is a block diagram illustrating an example of a configuration of each of the devices included in a data communication system according to a first modification of the embodiment;
FIG. 10 is a block diagram illustrating an example of a configuration of each of the devices included in a data communication system according to a second modification of the embodiment;
FIG. 11 is a block diagram illustrating an example of a configuration of each of the devices included in a data communication system according to a third modification of the embodiment; and
FIG. 12 is a block diagram illustrating an example of a configuration of each of the devices included in a data communication system according to a fourth modification of the embodiment.

### DETAILED DESCRIPTION OF THE PREFERRED EMBODIMENTS

Hereinafter, preferred embodiments of a conversion apparatus and a communication method according to the present disclosure will be explained in detail below with reference to the accompanying drawings. Furthermore, the present disclosure is not limited to the embodiments described below.

In the following, a configuration and a process related to a data communication system 100 according to an embodiment, a configuration and a process related to each device included in the data communication system 100, a specific example of each of the configurations constituting the data communication system 100, the flow of each of the processes performed in the data communication system 100, and effects of the embodiment will be described. Moreover, in the embodiment, a communication conversion adapter 4 that converts a communication mode of data related to a field instrument 1 that is installed in each process performed in a plant will be described as one example, but a measurement target and a field of use are not specifically limited by the example.

### 1. Configuration and process related to data communication system 100

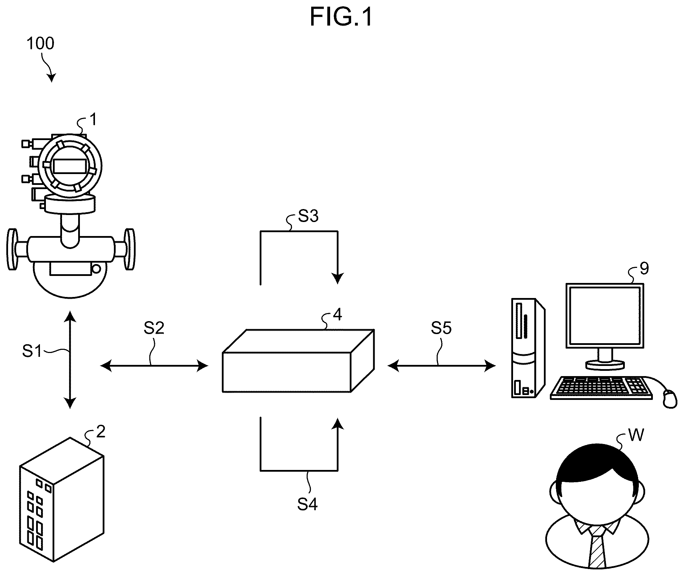

A configuration and a process related to the data communication system 100 according to the embodiment will be described with reference to FIG. 1. FIG. 1 is a diagram illustrating a configuration example and a process example related to the data communication system 100 according to the embodiment. In the following, an example of the overall configuration of the data communication system 100, an example of the overall process performed in the data communication system 100, and the effects of the data communication system 100 will be described.

### 1-1. Example of overall configuration of data communication system 100

An example of the overall configuration of the data communication system 100 will be described with reference to FIG. 1. The data communication system 100 is constituted by the field instrument 1, a controller 2, the communication conversion adapter 4, and a wireless host 9.

Here, the field instrument 1 and the controller 2 are connected by an electric current output loop line 101 that is not illustrated in FIG. 1. Furthermore, the communication conversion adapter 4 is connected to the field instrument 1 and the controller 2 by a wired communication network 102 that is not illustrated in FIG. 1. Furthermore, the communication conversion adapter 4 is connected to the wireless host 9 by a wireless communication network 105 that is not illustrated in FIG. 1.

### 1-1-1. Field instrument 1

The field instrument 1 is a measurement device or the like, and acquires process data that indicates a temperature, a flow rate, a pressure, or the like of each of the processes performed in the plant. Furthermore, the field instrument 1 is managed by a worker W who carries out a task in each of the processes performed in the plant. Moreover, two or more of the field instruments 1 may be included in the data communication system 100 illustrated in FIG. 1. In the following, in some cases, the plurality of field instruments 1 are also referred to as the "field instrument 1".

### 1-1-2. Controller 2

The controller 2 receives a signal sent from the field instrument 1. For example, the controller 2 receives the process data that has been acquired by the field instrument 1, and transmits control data that is used to acquire information on the field instrument 1. Moreover, two or more of the controllers 2 may be included in the data communication system 100 illustrated in FIG. 1. In the following, in some cases, the plurality of controllers 2 are also referred to as the "controller 2".

### 1-1-3. Communication conversion adapter 4

The communication conversion adapter 4 is a conversion apparatus that converts a communication mode of wired communication and wireless communication that is used for transmission of the data related to the field instrument 1 installed in each of the processes performed in the plant.

### 1-1-4. Wireless host 9

The wireless host 9 is a worker terminal that is used by the worker W, and performs wireless communication. Moreover, two or more of the wireless hosts 9 may be included in the data communication system 100 illustrated in FIG. 1. Furthermore, in the example illustrated in FIG. 1, a case in which the wireless host 9 is implemented by a desktop personal computer (PC) is illustrated, but the wireless host 9 may also be implemented by a notebook PC, a smartphone, a tablet terminal, a router, or the like.

### 1-2. Example of overall process performed in data communication system 100

An example of the overall process performed in the data communication system 100 will be described. In the following, a data communication process (Step S1), a data input process (Step S2), a data writing process (Step S3), a data readout process (Step S4), and a data output process (Step S5) will be described. Moreover, the processes performed at Steps S1 to S5 described below may be performed in different order. Furthermore, some of the processes performed at Steps S1 to S5 described below may be omitted.

In the following, the data that is input to a large capacity memory 10 that is not illustrated in FIG. 1 and that is included in the communication conversion adapter 4 in the data input process performed at Step S2 is sometimes referred to as "internal data" or "first data". Furthermore, the data that is output from the large capacity memory 10 included in the communication conversion adapter 4 in the data output process performed at Step S5 is sometimes referred to as "external data" or "second data".

### 1-2-1. Data communication process

At a first step, the field instrument 1 and the controller 2 perform the data communication process (Step S1). For example, the field instrument 1 and the controller 2 perform the data communication by the wired communication, such as HART (Highway Addressable Remote Transducer) communication or BRAIN communication, via the electric current output loop line 101. At this time, the field instrument 1 transmits the process data to the controller 2. Furthermore, the controller 2 transmits the control data to the field instrument 1. Furthermore, electric power for operating the controller 2 or the field instrument 1 is supplied to the communication conversion adapter 4 via the electric current output loop line 101.

### 1-2-2. Data input process

At a second step, the communication conversion adapter 4 performs the data input process (Step S2). For example, the communication conversion adapter 4 receives an input of the process data that has been transmitted by the field instrument 1. Furthermore, the communication conversion adapter 4 transmits the control data to the field instrument 1. At this time, the field instrument 1 transmits the process data or a diagnostic parameter to the communication conversion adapter 4 in accordance with a request received from the communication conversion adapter 4.

### 1-2-3. Data writing process

At a third step, the communication conversion adapter 4 performs the data writing process (Step S3). For example, the communication conversion adapter 4 performs data writing process of writing the internal data that has been input. At this time, the communication conversion adapter 4 writes the internal data to the large capacity memory 10. Furthermore, the communication conversion adapter 4 writes the internal data to the large capacity memory 10 by way of a path 106 (hereinafter, referred to as a "first path" as appropriate) that is not illustrated in FIG. 1 from among the paths that are switchable by a selector 11 that is not illustrated in FIG. 1.

### 1-2-4. Data readout process

At a fourth step, the communication conversion adapter 4 performs the data readout process (Step S4). For example, the communication conversion adapter 4 performs data readout process of reading out the external data that is to be output. At this time, the communication conversion adapter 4 reads out the external data from the large capacity memory 10. Furthermore, the communication conversion adapter 4 reads out the external data from the large capacity memory 10 by wat if a path 107 (hereinafter, referred to as a "second path" as appropriate) that is not illustrated in FIG. 1 from among the paths that are switchable by the selector 11.

### 1-2-5. Data output process

At a fifth step, the communication conversion adapter 4 performs the data output process (Step S5). For example, the communication conversion adapter 4 outputs the process data and the diagnostic parameter as the external data that has been read out from the large capacity memory 10 to the wireless host 9. At this time, the wireless host 9 performs data communication with the field instrument 1 by way of the communication conversion adapter 4 by using wireless communication, such as Bluetooth (registered trademark) Low Energy (BLE) communication.

### 1-3. Effects of data communication system 100

In the following, a problem in a data communication system 100-P according to a reference technology will be described, and then, the effects of the data communication system 100 according to the embodiment will be described.

### 1-3-1. Problem in data communication system 100-P

The following problem is present in the data communication system 100-P according to the reference technology. For example, in a case where a communication conversion adapter 4-P according to the data communication system 100-P is constituted to have mounted thereon the large capacity memory 10 that stores therein the process data, there is a limitation on the amount of electric power that is able to be supplied from the controller 2 and the field instrument 1 that are connected to the electric current output loop line 101 that is used for the wired communication, so that the communication conversion adapter 4-P may become inoperable. On the other hand, in a case where the communication conversion adapter 4-P has mounted thereon a battery, the communication conversion adapter 4-P may stop operating due to the battery running out of power.

### 1-3-2. Outline of data communication system 100

In the data communication system 100 according to the embodiment, the following processes are performed. At a first step, the field instrument 1 and the controller 2 perform data communication by using wired communication, such as the HART communication or the BRAIN communication. At a second step, the communication conversion adapter 4 receives an input of the internal data, such as the process data or the diagnostic parameter. At a third step, the communication conversion adapter 4 writes the internal data to the large capacity memory 10 by way of the path 106 from among the paths that are switchable by the selector 11. At a fourth step, the communication conversion adapter 4 reads out the external data from the large capacity memory 10 by way of the path 107 from among the paths that are switchable by the selector 11. At a fifth step, the communication conversion adapter 4 outputs the external data that has been read out from the large capacity memory 10 to the wireless host 9 that performs the data communication by using the wireless communication, such as the BLE communication.

### 1-3-3. Effects of data communication system 100

In the data communication system 100 according to the embodiment, the following effects are provided. As a first effect, in the data communication system 100, the communication conversion adapter 4 is able to convert a communication format of each of the wired communication and the wireless communication, so that the communication conversion adapter 4 enables an access to all of the pieces of data acquired by the field instrument 1. As a second effect, in the data communication system 100, the communication conversion adapter 4 receives a supply of electric power from the controller 2 and the field instrument 1 that are connected to the electric current output loop line 101, so that the communication conversion adapter 4 does not stop operating due to the battery running out of power. As a third effect, in the data communication system 100, electric power is optimized as a result of the communication conversion adapter 4 separating the paths for data writing and for data readout by using the selector 11, which enables the data to be stored by using the large capacity memory 10.

As described above, the data communication system 100 is able to reduce the electric power consumption in the communication conversion adapter 4, so that it is possible to optimize the data communication in the wired communication and the wireless communication as a result of the communication conversion adapter 4 having mounted thereon the large capacity memory 10.

2. Configuration and process related to each device included in data communication system 100

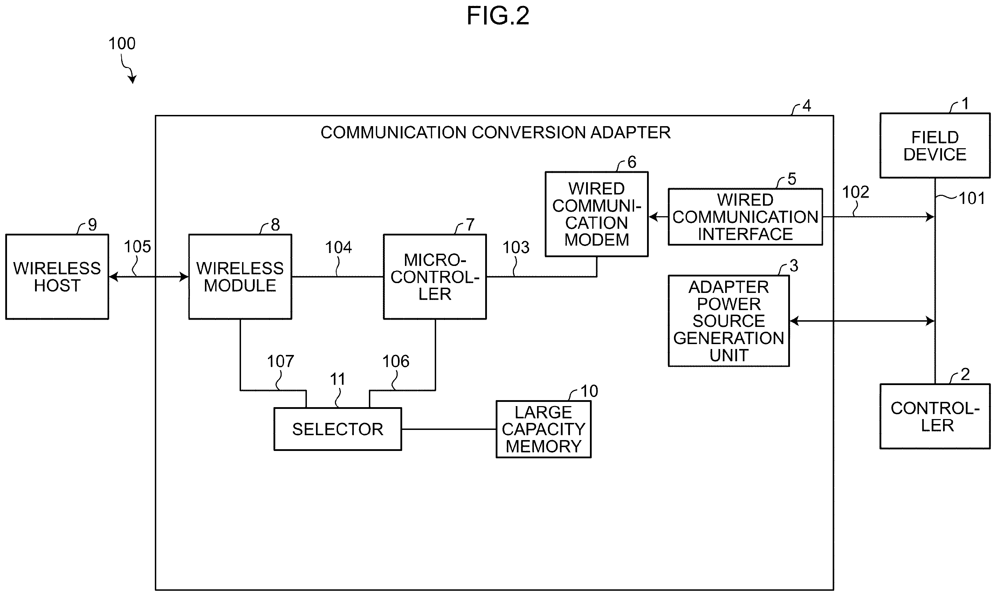

A configuration and a process related to each of the devices included in the data communication system 100 illustrated in FIG. 1 will be described with reference to FIG. 2. In the following, an example of the overall configuration of the data communication system 100 according to the embodiment, a configuration example and a process example related to the field instrument 1, a configuration example and a process example related to the controller 2, a configuration example and a process example related to of the communication conversion adapter 4, and a configuration example and a process example related to the wireless host 9 will be described.

### 2-1. Example of the overall configuration of data communication system 100

An example of the overall configuration of the data communication system 100 illustrated in FIG. 1 will be described with reference to FIG. 2. FIG. 2 is a block diagram illustrating an example of the configuration of each of the devices included in the data communication system 100 according to the embodiment. As illustrated in FIG. 2, the data communication system 100 is constituted by the field instrument 1, the controller 2, the communication conversion adapter 4, and the wireless host 9.

Here, the field instrument 1 and the controller 2 are connected by the electric current output loop line 101. Furthermore, the communication conversion adapter 4 is connected to the field instrument 1 and the controller 2 by the wired communication network 102. Furthermore, the communication conversion adapter 4 is connected to the wireless host 9 by the wireless communication network 105.

### 2-2. Configuration example and process example related to field instrument 1

A configuration example and a process example related to the field instrument 1 will be described. For example, the field instrument 1 is a measurement device that is installed at each of the processes performed in the plant, and is implemented by a thermometer, a flow meter, a pressure meter, or the like.

The field instrument 1 is a thermometer, acquires temperature data that indicates a temperature as process data, and transmits the acquired temperature data to the controller 2. Furthermore, the field instrument 1 is a flow meter, acquires flow rate data that indicates a flow rate as process data, and transmits the acquired flow rate data to the controller 2. Furthermore, the field instrument 1 is a pressure meter, acquires pressure data that indicates a pressure as process data, and transmits the acquired pressure data to the controller 2. Moreover, the details of the field instrument 1 will be described later with the title of [3. Specific example of each configuration constituting data communication system 100].

### 2-3. Configuration example and process example related to controller 2

A configuration example and a process example related to the controller 2 will be described. For example, the controller 2 is implemented by a distributed control node (DCN) that controls the field instrument 1.

The controller 2 receives the pieces of process data corresponding to the temperature data that indicates the temperature, the flow rate data that indicates the flow rate, the pressure data that indicates the pressure, and the like that have been transmitted by the field instrument 1. Furthermore, the controller 2 transmits control data, such as a control signal, to the field instrument 1.

Furthermore, the controller 2 includes a termination resistance that converts an electric current that has been output from the field instrument 1 to a voltage. Furthermore, in a case of the field instrument 1 is a two-wire system, the controller 2 supplies electric power to the electric current output loop line 101. Moreover, the electric power to be supplied is able to be supplied from a direct current power source when the controller 2 does not use the electric power for the control.

### 2-4. Configuration example and process example related to communication conversion adapter 4

A configuration example and a process example related to the communication conversion adapter 4 will be described. The communication conversion adapter 4 is a conversion apparatus that performs interconversion between the wired communication and the wireless communication. The communication conversion adapter 4 includes an adapter power source generation unit 3, a wired communication interface 5, a wired communication modem 6, a microcontroller 7, a wireless module 8, the large capacity memory 10, and a selector 11.

### 2-4-1. Adapter power source generation unit 3

The adapter power source generation unit 3 is a management unit that manages a power source of the communication conversion adapter 4. For example, the adapter power source generation unit 3 that enables electric power to be supplied from the controller 2 and the field instrument 1 that are external devices connected to the electric current output loop line 101 that is used for the wired communication to the communication conversion adapter 4. Moreover, the details of the adapter power source generation unit 3 will be described later with the title of "3. Specific example of each configuration constituting data communication system 100".

### 2-4-2. Wired communication interface 5

The wired communication interface 5 is an interface for performing the wired communication between the field instrument 1 and the communication conversion adapter 4 via the wired communication network 102. For example, the wired communication interface 5 is implemented by a condenser. Furthermore, the wired communication interface 5 insulates to prevent a DC voltage, a direct current, a direct current signal, or the like from entering the wired communication modem 6.

### 2-4-3. Wired communication modem 6

The wired communication modem 6 performs a data reception process and a data transmission process. Here, the reception data that is received in the data reception process is, for example, the process data, the diagnostic parameter, or the like. Furthermore, the transmission data that is transmitted at the time of the data transmission process is, for example, the control data, or the like. For example, the wired communication modem 6 receives, as the data reception process, the process data acquired by the field instrument 1 or the diagnostic parameter for the field instrument 1. Furthermore, as the data reception process, the wired communication modem 6 converts the signal received from the wired communication network 102 into the digital process signal that is able to be decoded by the microcontroller 7, and transmits the converted digital process signal to a path 103. At this time, the wired communication modem 6 performs a filtering process for removing noise or performs an analog to digital conversion process.

Furthermore, the wired communication modem 6 transmits the control data to the field instrument 1 as the data transmission process. Furthermore, as the data transmission process, the wired communication modem 6 converts the digital process signal received from the path 103 into the analog signal that is able to be decoded by the field instrument 1, and transmits the converted analog signal to the wired communication network 102. At this time, the wired communication modem 6 performs a digital to analog conversion process for modulating the digital process signal received from the microcontroller 7.

### 2-4-4. Microcontroller 7

The microcontroller 7 manages the overall control of the communication conversion adapter 4. Here, the microcontroller 7 is implemented by, for example, an electronic circuit, such as a central processing unit (CPU) or a micro processing unit (MPU), or an integrated circuit, such as an application specific integrated circuit (ASIC) or a field programmable gate array (FPGA).

For example, the microcontroller 7 receives the digital process signal sent from the path 103, and performs arithmetic processing. Furthermore, the microcontroller 7 converts the signal received from a path 104 into the digital process signal, and transmits the converted digital process signal to the wired communication modem 6.

Furthermore, the microcontroller 7 is a first processor that controls a process related to the wired communication that is used by the communication conversion adapter 4, and performs an internal process on internal data (the first data) that is input by the wired communication to the large capacity memory 10 that is the device. Here, the wired communication is, for example, the HART communication or the BRAIN communication. At this time, the microcontroller 7 performs, as the internal process, a writing process on the process data that has been acquired by the field instrument 1 by way of the path 106 (the first path). Furthermore, the microcontroller 7 performs, as the internal process, a writing process on the trend data related to the diagnostic parameter for the field instrument 1. At this time, for example, the microcontroller 7 performs the writing process on the time series data of the diagnostic parameter that is the diagnostic result related to the field instrument 1 and that is output from the field instrument 1.

### 2-4-5. Wireless module 8

The wireless module 8 manages a process related to the wireless communication performed in the communication conversion adapter 4. Here, the wireless module 8 is implemented by, for example, an electronic circuit, such as a CPU or an MPU, or an integrated circuit, such as an ASIC or an FPGA.

For example, the wireless module 8 is a second processor that controls a process related to the wireless communication performed by the communication conversion adapter 4, and performs an external process on an external data (the second data) that is output by the wireless communication to the large capacity memory 10 that is the device. Here, the wireless communication is, for example, the BLE communication. At this time, the wireless module 8 performs, as the external process, a readout process on the process data that has been acquired by the field instrument 1 by way of the path 107 (the second path). Furthermore, the microcontroller 7 performs, as the external process, a readout process on the trend data related to the diagnostic parameter for the field instrument 1. Moreover, the details of the wireless module 8 will be described later with the title of "3. Specific example of each configuration constituting data communication system 100".

### 2-4-6. Large capacity memory 10

The large capacity memory 10 is a device that is connected to the selector 11. Furthermore, the large capacity memory 10 is a memory that enables data to be stored. Here, the large capacity memory 10 is implemented by, for example, a ferroelectric random access memory (F-RAM) (registered trademark).

For example, the large capacity memory 10 receives the internal process to be performed on the internal data by way of the path 106. At this time, the large capacity memory 10 receives, as the internal process, the writing process to be performed on the internal data that is input to the wired communication. Furthermore, the large capacity memory 10 receives, as the internal process, the writing process to be performed on the process data that has been acquired by the field instrument 1. Furthermore, the large capacity memory 10 receives the writing process to be performed on the trend data related to the diagnostic parameter for the field instrument 1.

For example, the large capacity memory 10 receives the external process to be performed on the external data by way of the path 107. At this time, the large capacity memory 10 receives, as the external process, the readout process to be performed on the external data that is output by the external communication. Furthermore, the large capacity memory 10 receives, as the external process, the readout process to be performed on the process data that has been acquired by the field instrument 1. Furthermore, the large capacity memory 10 receives the readout process to be performed on the trend data related to the diagnostic parameter for the field instrument 1. Moreover, the details of the large capacity memory 10 will be described later with the title of "3. Specific example of each configuration constituting data communication system 100".

### 2-4-7. Selector 11

The selector 11 selects a path that is used to transmit and receive the data. Here, the selector 11 is implemented by, for example, a multiplexer.

For example, the selector 11 switches between the path 106 through which the internal data that is input to the large capacity memory 10 passes and the path 107 through which the external data that is output from the large capacity memory 10 passes. Moreover, the details of the selector 11 will be described later with the title of "3. Specific example of each configuration constituting data communication system 100".

### 2-5. Configuration example and process example related to wireless host 9

A configuration example and a process example related to the wireless host 9 will be described. For example, the wireless host 9 is a desktop PC, a notebook PC, a smartphone, a tablet terminal, a router, or the like, and is implemented by a digital device that enables near field wireless communication, such as the BLE communication.

The wireless host 9 acquires process information that is related to the plant and that is stored in the field instrument 1. For example, the wireless host 9 acquires the process information that is requested by the worker W from the field instrument 1 by transmitting, in accordance with an input performed by the worker W, a command corresponding to the process information to the field instrument 1 via the wireless communication network 105.

### 3. Specific example of each configuration constituting data communication system 100

A specific example of each of the configurations constituting the data communication system 100 according to the embodiment will be described. In the following, a specific example of the field instrument 1 and a specific example of each of the configurations constituting the communication conversion adapter 4 will be described.

### 3-1. Specific example of field instrument 1

A specific example of the field instrument 1 included in the data communication system 100 will be described. The field instrument 1 is a measurement device that measures a temperature, a flow rate, a pressure, and the like that are indispensable to drive the plant. Furthermore, the field instrument 1 is a two-wire system or a four-wire system, and has a wired communication function. Here, the wired communication is, for example, the HART communication or the BRAIN communication.

The field instrument 1 performs an electric current output with respect to the measured physical amount. For example, the field instrument 1 outputs 4 mA when a process value is 0%, and outputs 20 mA when a process value is 100%. Furthermore, the field instrument 1 has a burnout function that outputs an electric current value (for example: low burnout 3.6 mA, high burnout 21.6 mA) other than 4 to 20 mA in an abnormal circumstance. The field instrument 1 performs, as the wired communication, data communication by superimposing an electric current signal or a voltage signal with respect to the electric current output loop line 101.

### 3-2. Specific example of each of configurations constituting communication conversion adapter 4

A specific example of each of the configurations constituting the communication conversion adapter 4 included in the data communication system 100 will be described. In the following, as the specific example of each of the configurations constituting the communication conversion adapter 4, a specific example of the adapter power source generation unit 3, a specific example of the wireless module 8, a specific example of the large capacity memory 10, and a specific example of the selector 11 will be described.

### 3-2-1. Specific example of adapter power source generation unit 3

The adapter power source generation unit 3 generates a power source for the communication conversion adapter 4. For example, the adapter power source generation unit 3 is a constant voltage device, such as a Zener diode. Furthermore, the adapter power source generation unit 3 is connected to the electric current output loop line 101 as a serial connection, and receives a supply of electric power from the controller 2 by causing a certain voltage drop.

Here, the maximum value of the electric power that is used by the adapter power source generation unit 3 is the product of a voltage drop value of the adapter power source generation unit 3 and an electric current output value of the field instrument 1. The communication conversion adapter 4 needs to operate at conceivable minimum electric power, so that the communication conversion adapter 4 is designed to operate at the time of low burnout of the field instrument 1. For example, the communication conversion adapter 4 is designed to operate at 10.8 mW or below when a voltage drop of the adapter power source generation unit 3 is 3 V. In this way, there is a significant constraint on the electric power that is able to be output by the adapter power source generation unit 3.

The communication conversion adapter 4 is able to avoid the above described constraint on the electric power by installing a battery, but, there may be a case in which the communication conversion adapter 4 may stop operating due to the battery running out of power. At this time, in the plant in which the field instrument 1 is used, a period of time in which the plant is down directly leads to production stoppages causes economic losses for users, so that the plant needs to continuously perform its operation. As a result of this, the field instrument 1 is expected to be used on the site for ten years or more. When the battery runs out, the communication conversion adapter 4 not only fails to perform a desired operation, but also incurs a risk of affecting the normal operation of the field instrument 1, so that it is desirable that the communication conversion adapter 4 always operates properly. Furthermore, there is a risk of using a battery due to its large size or a limitation on an environment in which the battery is able to be used. As described above, it is difficult to use a battery in terms of solving the problem in electric power. As a result of this, it is optimum to use the electric current output loop line 101 for the field instrument 1 in terms of long time drive and environmental resistance.

### 3-2-2. Specific example of wireless module 8

The wireless module 8 performs the wireless communication. Here, it is preferable that the wireless communication adopts BLE due to a constraint on the electric power. Moreover, in a case where a battery is installed outside the communication conversion adapter 4, it is possible to implement a communication protocol, such as Wi-Fi (registered trademark) or a LoRa WAN (registered trademark) network.

The wireless module 8 processes a radio signal that has been received via the wireless communication network 105, converts the radio signal into a signal that is able to be decoded by the microcontroller 7, and transmits the converted signal to the path 104. Furthermore, the wireless module 8 processes the digital process signal that has been received via the path 104 such that the wireless communication network 105 is able to perform the wireless communication. Furthermore, the wireless module 8 transmits the processed digital process signal to the wireless host 9 via the wireless communication network 105. At this time, the wireless module 8 performs a complex process regarding the wireless communication, so that the wireless module 8 operates at high clock frequency of about 30 MHz. As a result of this, the wireless module 8 consumes a large amount of electric power during operation, but the wireless module 8 implements a low electric power consumption by entering a sleep state in an unprocessed time.

The wireless module 8 has an arithmetic function, similarly to the microcontroller 7. Here, the reason that the communication conversion adapter 4 installed therein two arithmetic units will be explained.

As a first reason, the communication conversion adapter 4 is able to implement an improvement in real-time performance and flexibility of the function by performing parallel processing of wireless communication and device control. As a result of this, the communication conversion adapter 4 is able to ensure stable performance even in a case where the real-time performance is needed for each of the systems.

As a second reason, the communication conversion adapter 4 able to reduce the load applied to the wireless module 8 as a result of the microcontroller 7 performing the processes other than the wireless communication. As a result of this, the communication conversion adapter 4 is able to stabilize communication quality and is able to improve the overall efficiency of the system.

As a third reason, the communication conversion adapter 4 is able to perform scaling on the performance of the system in accordance with the intended use, so that the communication conversion adapter 4 is able to ensure expandability. As a result of this, the communication conversion adapter 4 is able to implement a higher performance function without changing the other configurations by upgrading only the microcontroller 7. Furthermore, in a case where another function (for example, a communication protocol) is added, is added, the communication conversion adapter 4 is able to perform unified management by using the microcontroller 7.

### 3-2-3. Specific example of large capacity memory 10

The large capacity memory 10 is a memory with a capacity of about a few megabits. The large capacity memory 10 is able to store the process data that has been acquired by the field instrument 1 from the wired communication. As a result of this, the communication conversion adapter 4 is able to accumulate a large amount of process data acquired by the field instrument 1 at the field level. Here, it is preferable to use a F-RAM for the large capacity memory 10 due to a constraint on the number of writable times or an electric power consumption. Moreover, in a case where there is no constraint, the large capacity memory 10 is able to use an electrically erasable programmable read-only memory (EEPROM) (registered trademark), a flash memory, a static RAM (SRAM), or the like. Here, the reason that the large capacity memory 10 is installed in the communication conversion adapter 4 will be described.

As a first reason, the communication conversion adapter 4 enables an access to past trend information on the field instrument 1 from the site by installing the large capacity memory 10. As a result of this, in the data communication system 100, the worker W is able to quickly perform analyze when a problem occurs and promptly perform troubleshooting. Furthermore, the worker W is able to check the trend data related to the diagnostic parameter for the field instrument 1.

On the other hand, in the data communication system 100-P according to the reference technology, the worker W is able to check a normal process value on a higher-level side, that is, on the controller 2 side, but it is difficult for the worker W to check the normal process value at the field level. Furthermore, in the data communication system 100-P, the controller 2 acquires only the data needed for the process control, so that it is difficult for the worker W to check the trend data related to the diagnostic parameter for the field instrument 1.

As a second reason, the communication conversion adapter 4 is able to continuously acquire the data from the field instrument 1 in a standalone manner by installing the large capacity memory 10. As a result of this, in the data communication system 100, it is possible to continuously acquire the data stored in the large capacity memory 10 that originates from the field instrument 1 each in a case where there is no worker W or relay device. Furthermore, in the data communication system 100, by causing Artificial Intelligence (AI) to perform machine learning on the pieces of data accumulated in the field instrument 1, it is possible to utilize for the life span predictive diagnosis of the field instrument 1.

On the other hand, in the data communication system 100-P according to the reference technology, in order to always acquire the data, the wireless module 8 and the wireless host 9 need to always be within a distance over which the wireless module 8 and the wireless host 9 are able to communicate with each other, but it is difficult for the worker W to stay in the same location at all times. Furthermore, in the data communication system 100-P, if a relay device, such as a router, is used, communication is possible without the worker W, but it is difficult to install a router at a plurality of places in the plant.

### 3-2-4. Specific example of selector 11

The selector 11 is a unit that selects a communication path that is used to perform communication with the large capacity memory 10. For example, a multiplexer is adopted for the selector 11. The selector 11 is able to implement low electric power consumption by separating functions by using the microcontroller 7 as an arithmetic unit for writing data and by using the wireless module 8 as an arithmetic unit for reading out data.

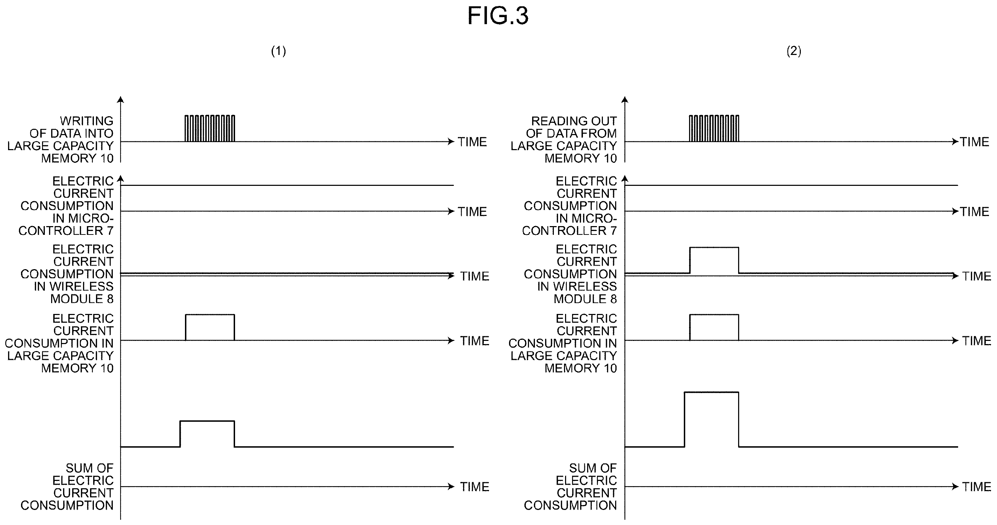

Here, the electric power consumed at the time of writing of data and at the time of reading out of data performed in the data communication system 100-P according to the reference technology will be described with reference to FIG. 3. FIG. 3 is a diagram illustrating a timing chart of the electric current consumption in the data communication system 100-P according to the reference technology.

FIG. 3 (1) indicates a timing chart of an electric current consumption in the data communication system 100-P at the time of writing of data. Here, the item of "writing of data into the large capacity memory 10" in FIG. 3 (1) indicates a period of time in which the data writing is performed. Furthermore, the item of "electric current consumption in the microcontroller 7" in FIG. 3 (1) indicates the electric current consumption in the microcontroller 7 at the time of writing of the data, and indicates a constant value regardless of the period of time in which data writing is performed. Furthermore, the item of "electric current consumption in the wireless module 8" in FIG. 3 (1) indicates the electric current consumption in the wireless module 8 at the time of the writing of data, and indicates a constant value regardless of the period of time in which the data writing is performed. Furthermore, the item of "electric current consumption in the large capacity memory 10" in FIG. 3 (1) indicates the electric current consumption in the large capacity memory 10 at the time of the writing of data, and the electric current consumption rises at a start time of the writing of the data, indicates a constant value during the writing of the data, and falls at an end time of the writing of the data. Furthermore, the item of the "sum of the electric current consumption" in FIG. 3 (1) indicates a total value of the electric current consumption in the microcontroller 7, the wireless module 8, and the large capacity memory 10 at the time of the writing of the data.

FIG. 3 (2) indicates a timing chart of the electric current consumption in the data communication system 100-P at the time of reading out of data. Here, the item of "reading out of data from the large capacity memory 10" in FIG. 3 (2) indicates the period of time in which the data readout is performed. Furthermore, the item of "electric current consumption in the microcontroller 7" in FIG. 3 (2) indicates the electric current consumption in the microcontroller 7 at the time of reading out of the data, and indicates a constant value regardless of the period of time in which the data readout is performed. Furthermore, the item of "electric current consumption in the wireless module 8" in FIG. 3 (2) indicates the electric current consumption in the wireless module 8 at the time of the reading out of the data, the electric current consumption rises at a start time of the reading out of the data, indicates a constant value during the reading out of the data, and falls at an end time of the reading out of the data. Furthermore, the item of "electric current consumption in the large capacity memory 10" in FIG. 3 (2) indicates the electric current consumption in the large capacity memory 10 at the time of the reading out of the data, the electric current consumption rises at the start time of the reading out of the data, indicates a constant value during the reading out of the data, and falls at the end time of the reading out of the data. Furthermore, the item of the "sum of the electric current consumption" in FIG. 3 (2) indicates a total value of the electric current consumption in the microcontroller 7, the wireless module 8, and the large capacity memory 10 at the time of the reading out of the data.

In the data communication system 100-P, in a case where the wireless host 9 continuously reads out a large amount of data, the clock frequency of the microcontroller 7 is slower than that of the wireless module 8, so that, if communication is performed via the wireless communication network 105 and the path 104, the path 104 becomes a bottleneck and thus a transmission speed slows down. Furthermore, in the data communication system 100-P, as the communication time taken in the path 104 increases, a period of time in which the wireless module 8 is in a sleep state decreases, and accordingly, the average electric power consumption in the communication conversion adapter 4 increases. Furthermore, in the data communication system 100-P, in the above described case, the communication conversion adapter 4 is not able to operate at 3.6 mA, that is, at the time of low burnout.

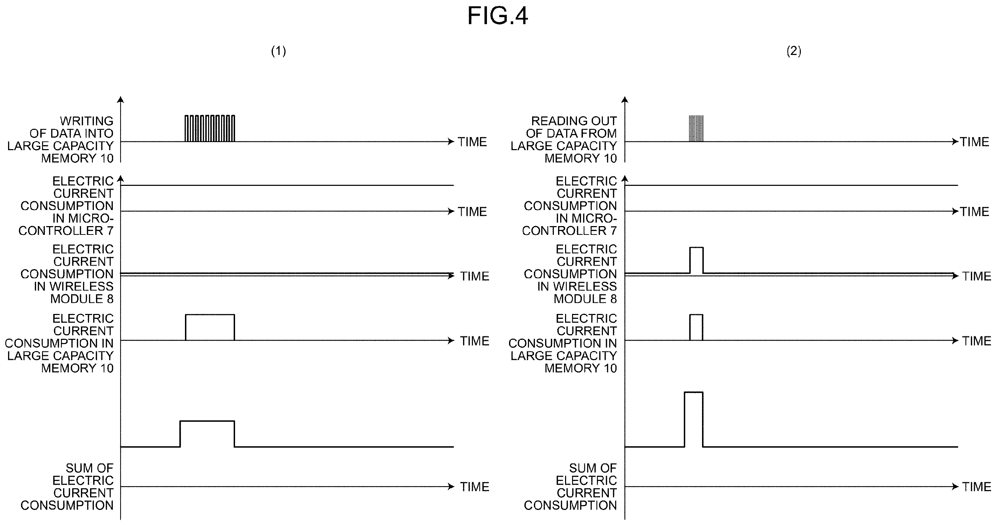

In the following, the electric power consumption in the data communication system 100 according to the embodiment at the time of writing of data and at the time of reading out of data will be described with reference to FIG. 4. FIG. 4 is a diagram illustrating a timing chart of the electric current consumption in the data communication system 100 according to the embodiment.

FIG. 4 (1) indicates a timing chart of the electric current consumption in the data communication system 100 at the time of writing of data. Moreover, the explanations of FIG. 4 (1) are the same as those described above in FIG. 3 (1), and descriptions thereof will be omitted.

FIG. 4 (2) indicates a timing chart of the electric current consumption in the data communication system 100 at the time of reading out of data. Here, the item of "reading out of data from the large capacity memory 10" in FIG. 4 (2) indicates a period of time in which the data readout is performed, and is shorter than a period of time in which the data readout is performed in the data communication system 100-P explained above in FIG. 3 (2). Furthermore, the item of "electric current consumption in the microcontroller 7" in FIG. 4 (2) indicates electric current consumption in the microcontroller 7 at the time of the reading out of the data, and the electric current consumption is the same as the electric current consumption in the microcontroller 7 included in the data communication system 100-P explained above in FIG. 3 (2). Furthermore, the item of "electric current consumption in the wireless module 8" in FIG. 4 (2) indicates the electric current consumption in the wireless module 8 at the time of the reading out of the data, and a period of time of the data readout in the electric current consumption in the wireless module 8 included in the data communication system 100 is shorter than that in the data communication system 100-P explained above in FIG. 3 (2). Furthermore, the item of "electric current consumption in the large capacity memory 10" in FIG. 4 (2) indicates the electric current consumption in the large capacity memory 10 at the time of reading out of data, and a period of time of the data readout in the electric current consumption in the large capacity memory 10 included in the data communication system 100 is shorter than that in the data communication system 100-P explained above in FIG. 3 (2). Furthermore, the item of the "sum of the electric current consumption" in FIG. 4 (2) indicates a total value of the electric current consumption in the microcontroller 7, the wireless module 8, and the large capacity memory 10 at the time of the data readout, and a period of time of the data readout in the electric current consumption in the microcontroller 7, the wireless module 8, and the large capacity memory 10 in the data communication system 100 is shorter than that in the data communication system 100-P explained above in FIG. 3 (2).

As described above, the data communication system 100 is able to perform communication without depending on the clock frequency of the path 104 by passing through the path 107 when the wireless module 8 reads out a large amount of data from the large capacity memory 10, without passing through the path 104. As a result of this, the data communication system 100 is able to drastically reduce the communication time needed between the wireless module 8 and the large capacity memory 10. Furthermore, the data communication system 100 is able to reduce the readout time by passing through the path 107 as compared with the data communication system 100-P that performs communication by passing through the path 104, and is able to implement low electric power consumption by allowing the wireless communication network 105 to quickly enter a sleep state. Furthermore, in the data communication system 100, when a large amount of data is transmitted to the wireless host 9, the data does not pass through the path 104. As a result of this, in a case where electric power to be supplied by the adapter power source generation unit 3 is insufficient or in a case where a process is to be stopped, it is possible to stop the operation via the path 104.

### 4. Flow of each process performed in data communication system 100

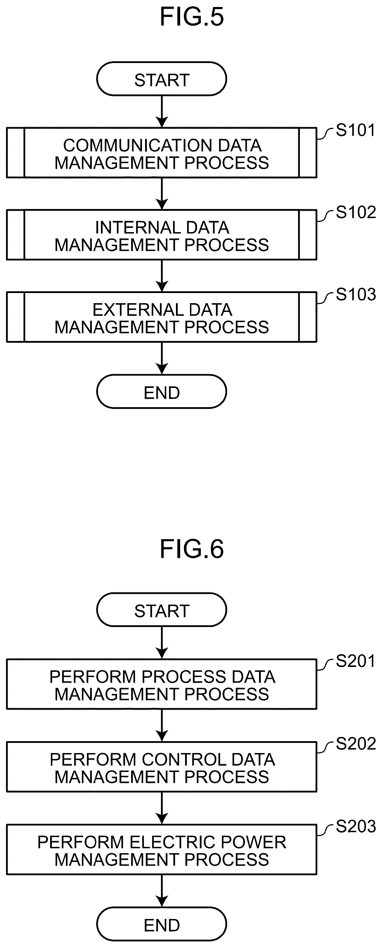

The flow of each of the processes performed in the data communication system 100 according to the embodiment will be described with reference to FIG. 5 to FIG. 8. In the following, the flow of the overall process performed in the data communication system 100 will be described first, and then, the flow of the communication data management process, the flow of the internal data management process, and the flow of the external data management process will be described.

### 4-1. Overall process of data communication system 100

The flow of the overall process performed in the data communication system 100 according to the embodiment will be described with reference to FIG. 5. FIG. 5 is a flowchart illustrating one example of the flow of the overall process performed in the data communication system 100 according to the embodiment. Moreover, the processes performed at Steps S101 to S103 described below may be performed in different order. Furthermore, some of the processes performed at Steps S101 to S103 described below may be omitted.

### 4-1-1. Communication data management process

At a first step, the data communication system 100 performs the communication data management process (Step S101). For example, the data communication system 100 manages the communication data that is transmitted and received between the field instrument 1 and the controller 2 by performing the processes at Steps S201 to S203 that will be described later.

### 4-1-2. Internal data management process

At a second step, the data communication system 100 performs the internal data management process (Step S102). For example, the data communication system 100 manages the internal data that is input to the large capacity memory 10 included in the communication conversion adapter 4 by performing the processes at Steps S301 to S303 that will be described later.

### 4-1-3. External data management process

At a third step, the data communication system 100 performs the external data management process (Step S103), and ends the overall process. For example, the data communication system 100 manages the external data that is output from the large capacity memory 10 included in the communication conversion adapter 4 by performing the processes at Step S401 to S403 that will be described later.

### 4-2. Flow of communication data management process

The flow of the communication data management process performed in the data communication system 100 according to the embodiment will be described with reference to FIG. 6. FIG. 6 is a flowchart illustrating one example of the flow of the communication data management process performed in the data communication system 100 according to the embodiment. Moreover, the processes performed at Steps S201 to S203 described below may be performed in different order. Furthermore, some of the processes performed at Steps S201 to S203 described below may be omitted.

### 4-2-1. Process data management process

At a first step, the field instrument 1 performs the process data management process (Step S201). For example, the field instrument 1 acquires the process data related to each of the processes performed in the plant, and transmits the acquired process data to the controller 2.

### 4-2-2. Control data management process

At a second step, the controller 2 performs the control data management process (Step S202). For example, the controller 2 transmits the control data, such as a control signal, to the field instrument 1.

### 4-2-3. Electric power management process

At a third step, the communication conversion adapter 4 performs the electric power management process (Step S203), and ends the communication data management process. For example, the communication conversion adapter 4 consumes the electric power supplied from the controller 2 via the electric current output loop line 101, and operates.

### 4-3. Flow of internal data management process

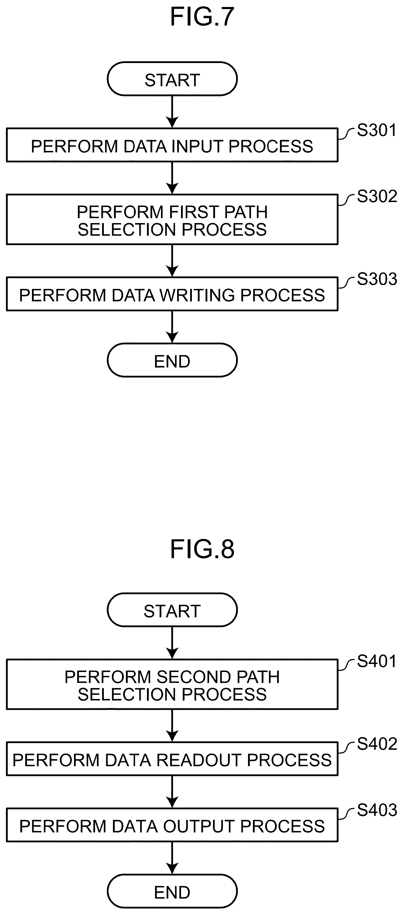

The flow of the internal data management process performed in the data communication system 100 according to the embodiment will be described in FIG. 7. FIG. 7 is a flowchart illustrating one example of the flow of the internal data management process performed in the data communication system 100 according to the embodiment. Moreover, the processes performed at Steps S301 to S303 described below may be performed in different order. Furthermore, some of the processes performed at Steps S301 to S303 described below may be omitted.

### 4-3-1. Data input process

At a first step, the communication conversion adapter 4 performs the data input process (Step S301). For example, the communication conversion adapter 4 receives an input of the process data or the diagnostic parameter transmitted by the field instrument 1.

### 4-3-2. First path selection process

At a second step, the communication conversion adapter 4 performs a first path selection process (Step S302). For example, the communication conversion adapter 4 selects the path 106 as the path through which the internal data passes, from among the paths that are switchable by the selector 11.

### 4-3-3. Data writing process

At a third step, the communication conversion adapter 4 performs the data writing process (Step S303), and ends the internal data management process. For example, in a case where the communication conversion adapter 4 receives an input of the internal data, the communication conversion adapter 4 writes the internal data into the large capacity memory 10.

### 4-4. Flow of external data management process

The flow of the external data management process performed in the data communication system 100 according to the embodiment will be described with reference to FIG. 8. FIG. 8 is a flowchart illustrating one example of the flow of the external data management process performed in the data communication system 100 according to the embodiment. Moreover, the processes performed at Steps S401 to S403 described below may be performed in different order. Furthermore, some of the processes performed at Steps S401 to S403 described below may be omitted.

### 4-4-1. Second path selection process

At a first step, the communication conversion adapter 4 performs a second path selection process (Step S401). For example, the communication conversion adapter 4 selects the path 107 as the path through which the external data passes, from among the paths that are switchable by the selector 11.

### 4-4-2. Data readout process

At a second step, the communication conversion adapter 4 performs the data readout process (Step S402). For example, in a case where the communication conversion adapter 4 receives an output of the external data from the wireless host 9, the communication conversion adapter 4 reads out the external data from the large capacity memory 10.

### 4-4-3. Data output process

At a third step, the communication conversion adapter 4 performs the data output process (Step S403), and ends the external data management process. For example, the communication conversion adapter 4 outputs the external data to the wireless host 9 that performs the wireless communication.

### 5. Configuration and process related to each device according to modification of embodiment

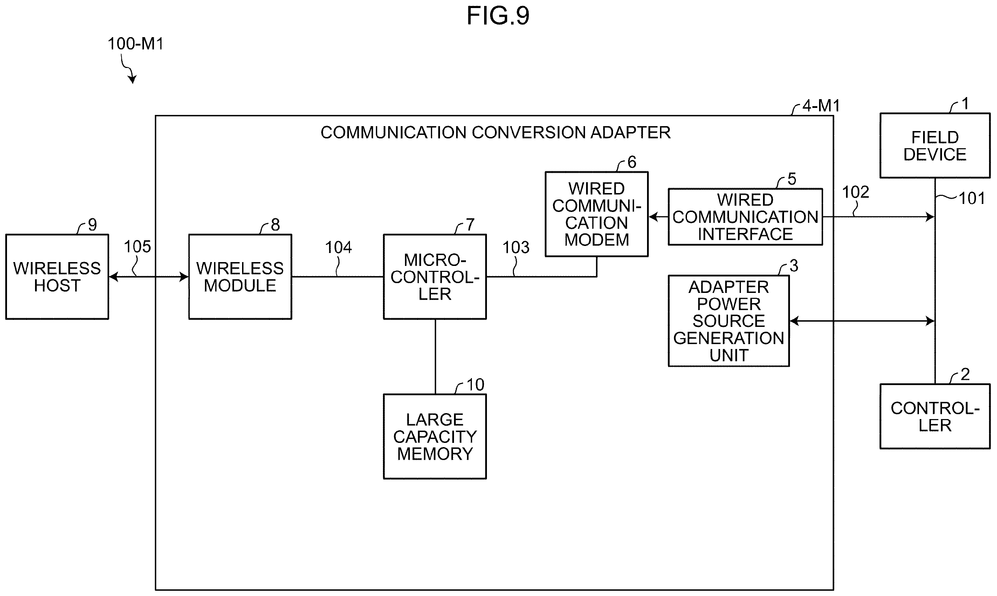

A configuration and a process related to each of the devices according to modifications of the embodiment will be described with reference to FIG. 9 to FIG. 12. In the following, a configuration example and a process example related to each of the devices according to a first to a fourth modifications of the embodiment will be described.

### 5-1. Configuration example and process example related to each device according to first modification of embodiment

A configuration example and a process example related to each of the devices included in a data communication system 100-M1 according to the first modification of the embodiment will be described with reference to FIG. 9. FIG. 9 is a block diagram illustrating an example of a configuration of each of the devices included in the data communication system 100-M1 according to the first modification of the embodiment. As illustrated in FIG. 9, the data communication system 100-M1 is constituted by the field instrument 1, the controller 2, a communication conversion adapter 4-M1, and the wireless host 9.

Here, the configuration example and the process example related to the field instrument 1, the controller 2, and the wireless host 9 are the same as those described above explained in the data communication system 100 according to the embodiment, and descriptions thereof will be omitted. In the following, a configuration example and a process example related to the communication conversion adapter 4-M1 according to the first modification of the embodiment will be described.

The communication conversion adapter 4-M1 includes the adapter power source generation unit 3, the wired communication interface 5, the wired communication modem 6, the microcontroller 7, the wireless module 8, and the large capacity memory 10. In other words, the communication conversion adapter 4-M1 is different from the communication conversion adapter 4 according to the embodiment in that the communication conversion adapter 4-M1 does not include the selector 11.

As described above, the communication conversion adapter 4-M1 is able to mount the large capacity memory 10 without optimizing electric power by the selector 11. For example, the communication conversion adapter 4-M1 has mounted thereon a battery (not illustrated), and performs arithmetic processing on the data that has been written into the large capacity memory 10 as needed by using the microcontroller 7, thereby enabling real-time maintenance of the field instrument 1 in a data driven manner. Furthermore, in a case where the battery is mounted on the communication conversion adapter 4-M1, the large capacity memory 10 is not limited to a F-RAM, it is possible to mount a memory that is less expensive and has greater capacity than the F-RAM.

### 5-2. Configuration example and process example related to each device according to second modification of embodiment

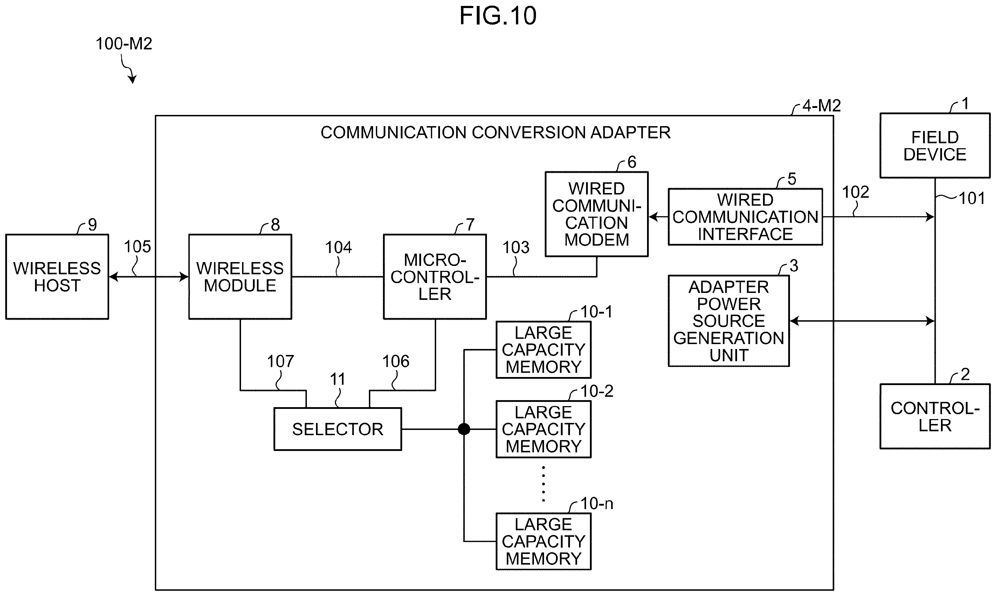

A configuration example and a process example related to each of the devices included in a data communication system 100-M2 according to the second modification of the embodiment will be described with reference to FIG. 10. FIG. 10 is a block diagram illustrating an example of the configuration of each of the devices included in the data communication system 100-M2 according to the second modification of the embodiment. As illustrated in FIG. 10, the data communication system 100-M2 is constituted by the field instrument 1, the controller 2, a communication conversion adapter 4-M2, and the wireless host 9.

Here, the configuration example and the process example related to the field instrument 1, the controller 2, and the wireless host 9 are the same as those described above explained in the data communication system 100 according to the embodiment, and descriptions thereof will be omitted. In the following, a configuration example and a process example related to the communication conversion adapter 4-M2 according to the second modification of the embodiment will be described.

The communication conversion adapter 4-M2 includes the adapter power source generation unit 3, the wired communication interface 5, the wired communication modem 6, the microcontroller 7, the wireless module 8, the n large capacity memories 10 (10-1, 10-2, ... , and 10-n), and the selector 11. In other words, the communication conversion adapter 4-M2 is different from the communication conversion adapter 4 according to the embodiment in that the communication conversion adapter 4-M2 includes two or more of the large capacity memories 10.

As described above, the communication conversion adapter 4-M2 is able to have mounted thereon two or more of the large capacity memories 10. As a result of this, the communication conversion adapter 4-M2 is able to accumulate a larger amount of data.

### 5-3. Configuration example and process example related to each device according to third modification of embodiment

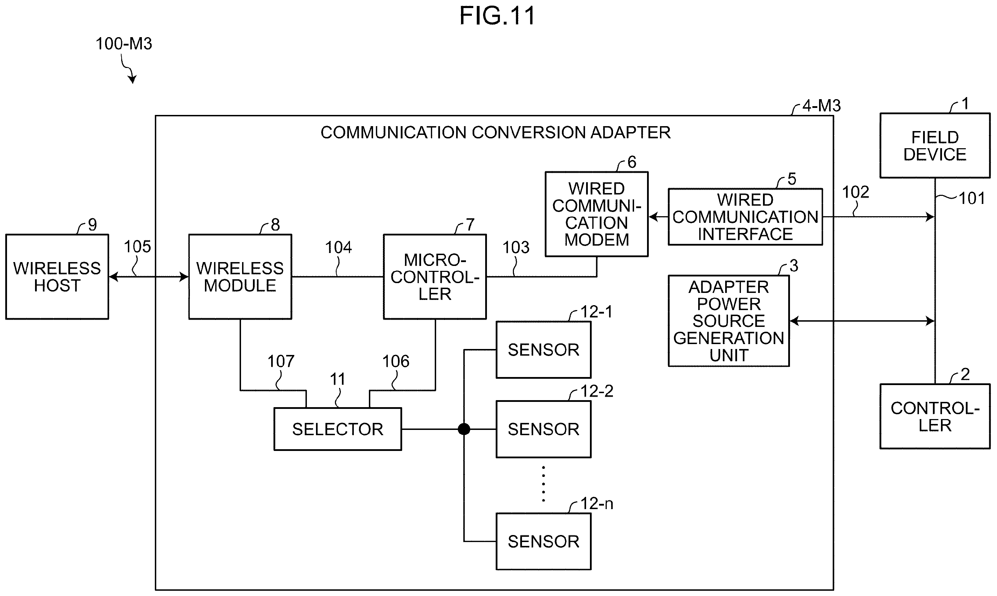

A configuration example and a process example related to each of the devices included in a data communication system 100-M3 according to the third modification of the embodiment will be described with reference to FIG. 11. FIG. 11 is a block diagram illustrating an example of the configuration of each of the devices included in the data communication system 100-M3 according to the third modification of the embodiment. As illustrated in FIG. 11, the data communication system 100-M3 is constituted by the field instrument 1, the controller 2, a communication conversion adapter 4-M3, and the wireless host 9.

Here, the configuration example and the process example related to the field instrument 1, the controller 2, and the wireless host 9 are the same as those described above explained in the data communication system 100 according to the embodiment, and descriptions thereof will be omitted. In the following, a configuration example and a process example related to the communication conversion adapter 4-M3 according to the third modification of the embodiment will be described.

The communication conversion adapter 4-M3 includes the adapter power source generation unit 3, the wired communication interface 5, the wired communication modem 6, the microcontroller 7, the wireless module 8, n sensors 12 (12-1, 12-2, ... , and 12-n), and the selector 11. In other words, the communication conversion adapter 4-M3 is different from the communication conversion adapter 4 according to the embodiment in that the communication conversion adapter 4-M3 includes two or more of the sensors 12 as the devices that are connected to the selector 11.

The sensor 12 is a device that is connected to the selector 11. Furthermore, the sensor 12 is a sensor that enables data to be stored. Here, the sensor 12 is implemented by, for example, a temperature sensor, a pressure sensor, an acceleration sensor, an optical sensor, or the like. Furthermore, in the example illustrated in FIG. 11, the sensor 12 is installed in the interior of the communication conversion adapter 4-M3, but the sensor 12 may be installed in an outside of the communication conversion adapter 4-M3.

For example, the sensor 12 receives an internal process of the internal data by way of the path 106. At this time, the sensor 12 receives a reception process of the internal data that is input as the internal process by using the wired communication.

For example, the sensor 12 receives an external process of external data by way of the path 107. At this time, the sensor 12 receives, as the external process, a detection process of the external data that is output by using the external communication. Furthermore, the sensor 12 receives, as the external process, the detection process of detecting the sensor data obtained by the sensor 12.

As described above, the communication conversion adapter 4-M3 is able to mount the sensor 12 that is able to perform serial peripheral interface (SPI) communication, instead of using the large capacity memory 10. Furthermore, the communication conversion adapter 4-M3 is able to further shorten the communication time with the sensor 12 by switching the path to the sensor 12 by the selector 11.

### 5-4. Configuration example and process example related to each device according to fourth modification of embodiment

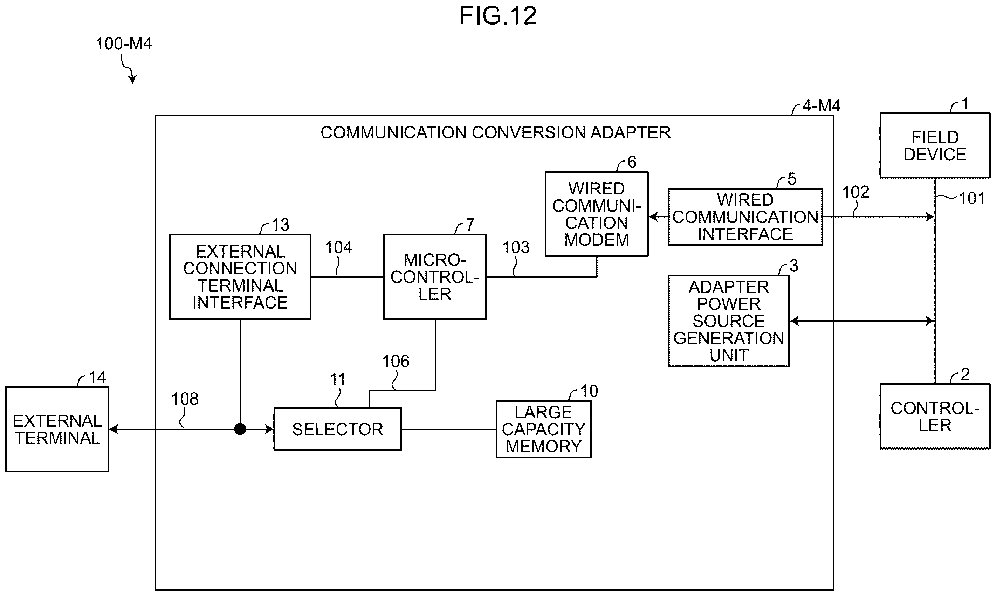

A configuration example and a process example related to each of the devices included in a data communication system 100-M4 according to the fourth modification of the embodiment will be described with reference to FIG. 12. FIG. 12 is a block diagram illustrating an example of the configuration of each of the devices included in the data communication system 100-M4 according to the fourth modification of the embodiment. As illustrated in FIG. 12, the data communication system 100-M4 is constituted by the field instrument 1, the controller 2, a communication conversion adapter 4-M4, and an external terminal 14. In other words, the data communication system 100-M4 is different from the data communication system 100 according to the embodiment in that the data communication system 100-M4 includes the external terminal 14 instead of the wireless host 9.

Here, the configuration example and the process example related to the field instrument 1 and the controller 2 are the same as those described above explained in the data communication system 100 according to the embodiment, and descriptions thereof will be omitted. In the following, a configuration example and a process example related to the external terminal 14, and a configuration example and a process example related to the communication conversion adapter 4-M4 according to the fourth modification of the embodiment will be described.

A configuration example and a process example related to the external terminal 14 will be described. For example, the external terminal 14 is a desktop PC, a notebook PC, a tablet terminal, or the like, and is implemented by a digital device that enables the wired communication.

The external terminal 14 acquires process information that is related to the plant and that is held by the field instrument 1. For example, the external terminal 14 acquires the process information that is requested by the worker W from the field instrument 1, in accordance with an input performed by the worker W, by transmitting a command corresponding to the process information to the field instrument 1 via a wired communication network 108.

The communication conversion adapter 4-M4 includes the adapter power source generation unit 3, the wired communication interface 5, the wired communication modem 6, the microcontroller 7, the large capacity memory 10, selector 11, and an external connection terminal interface 13. In other words, the communication conversion adapter 4-M4 is different from the communication conversion adapter 4 according to the embodiment in that the communication conversion adapter 4 includes the external connection terminal interface 13 instead of the wireless module 8.

The external connection terminal interface 13 is an interface for performing the wired communication between the large capacity memory 10 and the external terminal 14 via the wired communication network 108. For example, the external connection terminal interface 13 is implemented by a universal serial bus (USB) (registered trademark) interface (type A, B, or C), Ethernet (registered trademark), or RS-485.

As described above, the communication conversion adapter 4-M4 is able to mount the external connection terminal interface 13 for performing the wired communication with the external terminal 14. As a result of this, the communication conversion adapter 4-M4 enables data to be extracted from the external terminal 14 by using the wired communication.

### 6. Effects of embodiment

Effects of the embodiment will be described. In the following, a first to an eleventh effects corresponding to the processes according to the embodiment will be described.

### 6-1. First effect

As a first effect, in the embodiment, the communication conversion adapter 4 is a conversion apparatus that performs interconversion between the wired communication and the wireless communication, and includes the selector 11 and the device that is connected to the selector 11. The selector 11 switches between the path 106 through which the internal data that is input to the device passes and the path 107 through which the external data that is output from the device passes. The device receives the internal process to be performed on the internal data by way of the path 106, and receives the external process to be performed on the external data by way of the path 107. As a result of this, in the embodiment, it is possible to reduce the electric power consumption in the communication conversion adapter 4, so that it is possible to optimize the data communication in the wired communication and the wireless communication by mounting the large capacity memory 10 on the communication conversion adapter 4.

### 6-2. Second effect

As a second effect, in the embodiment, the device is the large capacity memory 10 that enables data to be stored, receives the writing process, as the internal process, to be performed on the internal data that is input by using the wired communication, and receives the readout process, as the external process, to be performed on the external data that is output by using the wireless communication. As a result of this, in the embodiment, it is possible to reduce the electric power consumption in the communication conversion adapter 4 having mounted thereon the large capacity memory 10 as the device, so that it is possible to optimize the data communication in the wired communication and the wireless communication.

### 6-3. Third effect

As a third effect, in the embodiment, the large capacity memory 10 receives the writing process to be performed on the process data that has been acquired by the field instrument 1, and receives the readout process to be performed on the process data that has been subjected to the writing process. As a result of this, in the embodiment, it is possible to reduce the electric power consumption in the communication conversion adapter 4 having mounted thereon the large capacity memory 10 as the device, so that it is possible to optimize the data communication of the process data acquired by the field instrument 1 in the wired communication and the wireless communication.

### 6-4. Fourth effect

As a fourth effect, in the embodiment, the large capacity memory 10 receives the writing process to be performed on the trend data related to the diagnostic parameter for the field instrument 1, and receives the readout process to be performed on the trend data that has been subjected to the writing process and that is related to the diagnostic parameter. As a result of this, in the embodiment, it is possible to reduce the electric power consumption in the communication conversion adapter 4 having mounted thereon the large capacity memory 10 as the device, so that it is possible to optimize the data communication of the trend data related to the diagnostic parameter for the field instrument 1 in the wired communication and the wireless communication.

### 6-5. Fifth effect

As a fifth effect, in the embodiment, the large capacity memory 10 is an F-RAM. As a result of this, in the embodiment, it is possible to reduce the electric power consumption in the communication conversion adapter 4 having mounted thereon the F-RAM as the large capacity memory 10, so that it is possible to optimize the data communication in the wired communication and the wireless communication.

### 6-6. Sixth effect

As a sixth effect, in the embodiment, the communication conversion adapter 4 further includes the adapter power source generation unit 3 that manages the power source of the communication conversion adapter 4. The adapter power source generation unit 3 causes electric power to be supplied from the controller 2 that is connected to the electric current output loop line 101 that is used for the wired communication to the communication conversion adapter 4. Furthermore, the adapter power source generation unit 3 receives a supply of electric power from the field instrument 1 that is connected to the electric current output loop line 101. As a result of this, in the embodiment, it is possible to reduce the electric power consumption in the communication conversion adapter 4 without having mounted thereon a battery, so that it is possible to optimize the data communication in the wired communication and the wireless communication.

### 6-7. Seventh effect

As a seventh effect, in the embodiment, the communication conversion adapter 4 further includes the microcontroller 7 that controls the process related to the wired communication used by the communication conversion adapter 4. The microcontroller 7 performs the internal process on the internal data that is input by using the wired communication to the device. As a result of this, in the embodiment, it is possible to reduce the electric power consumption in the communication conversion adapter 4 as a result of the microcontroller 7 performing the process related to the wired communication, so that it is possible to optimize the data communication in the wired communication and the wireless communication.

### 6-8. Eighth effect

As an eighth effect, in the embodiment, the communication conversion adapter 4 further includes the wireless module 8 that controls the process related to the wireless communication used by the communication conversion adapter 4. The wireless module 8 performs the external process on the external data that is output by using the wireless communication to the device. As a result of this, in the embodiment, it is possible to reduce the electric power consumption in the communication conversion adapter 4 as a result of the wireless module 8 performing the process related to the wireless communication, so that it is possible to optimize the data communication in the wired communication and the wireless communication.

### 6-9. Ninth effect

As a ninth effect, in the third modification of the embodiment, the device is a sensor that enables detection of the data, and receives the reception process, as the internal process, to be performed on the internal data that is input by using the wired communication, and receives the detection process, as the external process, to be performed on the external data that is output by using the wireless communication. As a result of this, in the third modification of the embodiment it is possible to reduce the electric power consumption in the communication conversion adapter 4 having mounted thereon the sensor 12 as the device, so that it is possible to optimize the data communication in the wired communication and the wireless communication.

### 6-10. Tenth effect

As a tenth effect, in the embodiment, the wired communication is the HART communication or the BRAIN communication. As a result of this, in the embodiment, it is possible to reduce the electric power consumption in the communication conversion adapter 4, so that it is possible to optimize the data communication in the HART communication or the BRAIN communication.

### 6-11. Eleventh effect

As an eleventh effect, in the embodiment, the wireless communication is the BLE communication. As a result of this, in the embodiment, it is possible to reduce the electric power consumption in the communication conversion adapter 4, so that it is possible to optimize the data communication in the BLE communication.

### 7. System

The flow of the processes, the control procedures, the specific names, and the information containing various kinds of data or parameters indicated in the above specification and drawings can be arbitrarily changed unless otherwise stated.

Furthermore, the components of each unit illustrated in the drawings are only for conceptually illustrating the functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions.

Furthermore, all or any part of each of the processing functions performed by each of the devices can be implemented by a CPU and by programs analyzed and executed by the CPU or implemented as hardware by wired logic.

According to the present disclosure, an advantage is provided in that it is possible to optimize data communication performed in wired communication and wireless communication.

## Claims

1. A conversion apparatus (4) that performs interconversion between wired communication and wireless communication, the conversion apparatus (4) comprising:
a selector (11); and
a device (10, 12) that is connected to the selector (11), wherein
the selector (11) switches between a first path (106) through which first data that is input to the device (10, 12) passes and a second path (107) through which second data that is output from the device (10, 12) passes, and
the device (10, 12) receives
an internal process to be performed on the first data by way of the first path (106), and
an external process to be performed on the second data by way of the second path (107).

2. The conversion apparatus (4) according to claim 1, wherein
the device (10, 12) is a memory (10) that enables data to be stored, and
the device (10) receives
a writing process, as the internal process, to be performed on the first data that is input by using the wired communication, and
a readout process, as the external process, to be performed on the second data that is output by using the wireless communication.

3. The conversion apparatus (4) according to claim 2, wherein
the memory (10) receives
the writing process to be performed on process data that has been acquired by a field instrument, and
the readout process to be performed on the process data.

4. The conversion apparatus (4) according to claim 2 or 3, wherein
the memory (10) receives
the writing process to be performed on trend data of a diagnostic parameter for a field instrument, and
the readout process to be performed on the trend data.

5. The conversion apparatus (4) according to any one of claims 2 to 4, wherein the memory (10) is a ferroelectric random access memory (F-RAM) (registered trademark).

6. The conversion apparatus (4) according to any one of claims 1 to 5, further comprising a management unit (3) that manages a power source of the conversion apparatus (4), wherein
the management unit (4) causes electric power to be supplied from an external device that is connected to an electric current output loop line that is used for the wired communication to the conversion apparatus (4).

7. The conversion apparatus (4) according to any one of claims 1 to 6, further comprising a first processor (7) that controls a process related to the wired communication used by the conversion apparatus (4), wherein
the first processor (7) performs the internal process on the first data that is input by using the wired communication to the device (10, 12).

8. The conversion apparatus (4) according to any one of claims 1 to 7, further comprising a second processor (8) that controls a process related to the wireless communication used by the conversion apparatus (4), wherein
the second processor (8) performs the external process on the second data that is output by using the wireless communication to the device (10, 12).

9. The conversion apparatus (4) according to any one of claims 1 to 8, wherein
the device (10, 12) is a sensor (12) that enables detection of data, and
the device (12) receives
a reception process, as the internal process, to be performed on the first data that is input by using the wired communication, and
a detection process, as the external process, to be performed on the second data that is output by using the wireless communication.

10. The conversion apparatus (4) according to any one of claims 1 to 9, wherein the wired communication is Highway Addressable Remote Transducer (HART) communication or BRAIN communication.

11. The conversion apparatus (4) according to any one of claims 1 to 10, wherein the wireless communication is Bluetooth Low Energy (BLE) communication.

12. A communication method performed by a conversion apparatus (4) that performs interconversion between wired communication and wireless communication and that includes a selector (11) and a device (10, 12) that is connected to the selector (11), the communication method comprising:
switching, performed by the selector (11), between a first path (106) through which first data that is input to the device (10, 12) passes, and a second path (107) through which second data that is output from the device (10, 12) passes;
receiving, performed by the device (10, 12), an internal process to be performed on the first data by way of the first path (106); and
receiving, performed by the device (10, 12), an external process to be performed on the second data by way of the second path (107).
